# EUROPÄISCHE PATENTANMELDUNG

(11) **EP 0 987 529 A1**
(43) Veröffentlichungstag der Anmeldung: **22.03.2000**
(21) Anmeldenummer: 99116073.0
(22) Anmeldetag: 17.08.1999
(51) Int. Cl.: G01K 7/18

(54) **Elektrischer Widerstand mit wenigstens zwei Anschlusskontaktfeldern auf einem Substrat mit wenigstens einer Ausnehmung sowie Verfahren zu dessen Herstellung**

(30) Priorität: 14.09.1998 DE 19841929
(71) Anmelder: Heraeus Electro-Nite International N.V., 3530 Houthalen (BE)
(72) Erfinder: Wienand, Karlheinz, Dr., 63741 Aschaffenburg (DE); Ullrich, Karlheinz, Dr., 64823 Gross-Umstadt (DE); Dietmann, Stefan, 63452 Hanau (DE)
(74) Vertreter: Kühn, Hans-Christian

(57) **Zusammenfassung**

Ein temperaturabhängiger Meßwiderstand mit geringer Masse und dadurch schneller Ansprechzeit weist eine Leiterbahn auf, die mit wenigstens zwei Anschluß-Kontaktfeldern versehen ist, sie ist auf einem Substrat aus Metall mit einer darauf befindlichen Isolationsschicht (Membran) aufgebracht; ein Teil der Leiterbahn überspannt eine Ausnehmung des Substrates brückenartig; die Leiterbahn ist durch eine Passivierungsschicht bis auf ihre Anschlußkontaktfelder selektiv abgedeckt.

## Beschreibung

Die Erfindung betrifft einen elektrischen Widerstand, insbesondere temperaturabhängigen Meßwiderstand schneller Ansprechzeit, mit einer Leiterbahn, die mit wenigstens zwei Anschlußkontaktfeldern versehen ist, die auf einer elektrisch isolierenden Oberfläche eines Substrats angeordnet sind, wobei ein Teil der Leiterbahn wenigstens eine Ausnehmung des Substrats brückenartig überspannt und die Leiterbahn in einer Ebene angeordnet ist, sowie ein Verfahren zu dessen Herstellung.

Aus der DE 197 53 642 A1 ist ein temperaturabhängiger Meßwiderstand mit rascher Ansprechzeit bekannt, der wenigstens teilweise auf einer elektrisch isolierenden Oberfläche eines Keramiksubstrats angeordnet ist, wobei ein Teil der Leiterbahn eine im Substrat befindliche Ausnehmung brückenartig überspannt und der übrige Teil der Leiterbahn im Randbereich des Substrats zur Ausnehmung benachbart mit Anschlußkontaktfeldern versehen ist; die Leiterbahn besteht aus einer Platin- oder einer Gold-Schicht, wobei die Leiterbahn ihrerseits mit einer Abdeckschicht aus Glas versehen ist; dabei sind die Anschlußkontaktfelder zwecks späterer Kontaktierung freigelassen.

Als problematisch erweist sich hierbei der verhältnismäßig aufwendige Aufbau, insbesondere im Hinblick auf die Strukturierung von Keramik oder Glas als Substrat.

Weiterhin ist aus der EP 0 446 667 A2 ein Temperatursensor bekannt, der auf einem elektrisch isolierenden und eine geringe Strahlungsabsorption aufweisenden Substrat in Dünnschichttechnik in Mäanderform aufgebrachte elektrisch leitende Leiterbahnen in einem Meßfenster aufweist, deren Endpunkte an eine Meßwerkschaltung angeschlossen sind; die Gesamtoberfläche der Leiterbahnen in der Projektion auf die Ebene des Substrates steht zu der Oberfläche des Meßfensters in einem Bedeckungsverhältnis von <20%, so daß die Leiterbahnen aufgenommene Strahlung ohne Interferenz mit anderen Leiterbahnen abgeben können. Entweder steht die Summe der Oberflächen des Meßfensters und des das Meßfenster umgebenden Substrats zu der das Substrat im Meßfensterbereich umrandete Randoberfläche in einem Flächenverhältnis von >4:1 oder das Substrat ist unter den Leiterbahnen im Meßfenster im wesentlichen weggeätzt. Dann ist die Querschnittsfläche der auf dem Substrat aufliegenden Umkehrschleifen der Leiterbahnen größer als die Querschnittsfläche der Leiterbahnen, so daß ein Widerstandseinfluß infolge der Temperatur des Substrats auf die Leiterbahnen wirkungsvoll verhindert wird. Mit diesem Temperatursensor sind Temperaturmessungen im Bereich zwischen -70 und +50°C möglich.

Weiterhin ist aus der DE 39 27 735 A1 ist eine Temperaturmeßanordnung (Strahlungsthermometer) mit einem temperaturempfindlichen Dünnschichtwiderstand bekannt, der maänderförmig auf eine Kunststoffolie aufgebracht ist, die über eine Höhlung eines Substratmaterials gespannt ist; als Substrat ist eine Leiterplatte bzw. ein Träger aus Epoxidharz vorgesehen.

Eine solche Temperaturmeßanordnung ist aufgrund der geringen thermischen Belastbarkeit von Kunstharz nur zum Einsatz in einer Umgebung mit Temperaturen unterhalb von 200°C geeignet.

Weiterhin ist aus der DE-OS 23 02 615 ein temperaturabhängiger elektrischer Widerstand aus Widerstandsmaterial, das als dünne Schicht eine gewundene Leiterbahn bildet, die auf einer dünnen Folie aufgebracht ist, bekannt; die aus polymerem Kunststoff bestehtende Folie überspannt mit ihrer unbeschichteten Seite eine Ausnehmung in einem Trägerkörper, der beispielsweise aus Kupfer besteht, wobei die Ausnehmung die gleiche Form hat wie die Leiterbahn und in Richtung senkrecht zur Folienebene gesehen mit ihr fluchtet; es handelt sich hierbei um eine Temperatur-Meßanordnung, die einen hohen technischen Aufwand für die erforderliche präzise Überdeckung von Leiterbahn und Aussparung erfordert.

Aus der DE 30 15 356 C2 ist es bekannt, daß elektrische Schaltungen in Dickschicht-Technologie vorzugsweise auf keramischen, plättchenförmigen Substraten durch Aufdrucken von Pasten hergestellt werden, deren aktives Material aus Metallpulvern, Glas- bzw. glaskeramischen Pulvern oder aus Mischungen von Glas und Metalloxiden bestehen. Zur Herstellung von schnellansprechenden Sensoren für die Temperaturmessung werden temperaturempfindliche Dickschichtwiderstände auf freitragende Schichten aufgebracht, die mit Hilfe eines unter Temperatureinwirkung vergasbaren Füllstoffs durch Pasten-Siebdruck entstanden sind und einen später gebildeten Hohlraum abdecken. Es handelt sich hierbei um ein verhältnismäßig aufwendiges Verfahren.

Weiterhin ist aus der DE 38 29 765 A1 bzw. der US 49 06 965 ein Platin-Temperatursensor bekannt, bei dem eine Platin-Widerstandsbahn mit wenigstens zwei Enden auf einer Oberfläche wenigstens eines Keramik-Substrats aufgebracht ist; zur Herstellung wird eine Platin-Leiterbahn in Form eines Mäander-Zickzackmusters auf die innere Oberfläche eines Keramikblatts aufgetragen, und anschließend zu einer Rolle geformt, wobei auch Brüche mit Justierbrücken zwischen benachbarten Punkten des Leiterbahnmusters zwecks Justierung vorgesehen sind. Das Keramik-Substrat wird zusammen mit dem aufgetragenen Platin-Widerstand gebrannt. Der Platinwiderstand ist durch Abdichtungsmaßnahmen gegenüber der Umgebungsatmosphäre und Feuchtigkeit resistent. Zusätzlich werden nach der Einjustierung auch die hierfür erforderlichen Durchführungsöffnungen und Leitungen mittels Keramik-Beschichtung oder Glaspaste abgedichtet.

Als problematisch erweisen sich bei einer solchen Anordnung die verhältnismäßig hohe Wärmekapazität, welche ein rasches Ansprechen bei plötzlichen Temperaturänderungen nicht ohne weiteres ermöglicht und einen exakten Meßwert erst nach Ablauf einer Übergangsfunktion wiedergibt.

Eine weitere Ausführungsform eines Widerstandselements als schnellen Temperaturfühler ist aus der DE 38 29 195 A1 bekannt; dabei ist das Widerstandselement als Schichtwiderstand aus Platin-Paste ausgebildet, der in einer aus Glaskeramik bestehenden Blase untergebracht ist, welche auf einem elektrisch isolierenden Keramik-Substrat aufgewölbt ist.

Als problematisch ist hierbei die freitragend gewölbte Widerstandsschicht im Hinblick auf mechanische Belastungen wie z. B. Stoß, Druck oder Vibration bei Anwendungen in rauher Umgebung zu sehen.

Die Erfindung stellt sich die Aufgabe einen Meßwiderstand zu schaffen, der einen möglichst einfachen Aufbau aufweist und mittels kostengünstiger Verfahren herzustellen ist.

Die Aufgabe wird für einen elektrischen Widerstand erfindungsgemäß dadurch gelöst, daß das Substrat aus Metall besteht und mit einer aufgebrachten Isolationsschicht als Membran versehen ist, wobei die Leiterbahn auf der Membran angeordnet ist.

Als besonders vorteilhaft erweist sich der robuste Aufbau, wobei insbesondere die Ausfallsicherheit bzw. Störsicherheit in Konsumgüteranwendungen sich als vorteilhaft auswirkt.

Vorteilhafte Ausgestaltungen des elektrischen Widerstandes sind in den Ansprüchen 2 bis 17 angegeben.

In einer bevorzugten Ausgestaltung der Erfindung ist die Leiterbahn durch eine Passivierungsschicht bis auf ihre Anschlußkontaktfelder selektiv abgedeckt; als vorteilhaft erweist sich dabei, daß der Pt-Mäander, welcher durch bekannte photolithographische und PVD-Verfahren hergestellt wird, dadurch vor Einwirkungen von Fremdstoffen von außen geschützt wird und seinen stabilen Widerstandswert für eine genaue Temperaturerfassung beibehält.

Weiterhin weist das Substrat vorzugsweise eine Dicke im Bereich von 0,15 mm bis 0,6 mm, vorzugsweise von 0,20 bis 0,25 mm auf; hieraus ergibt sich ein besonders rasches Ansprechverhalten; vorzugsweise besteht das Metall des Substrats aus einer Eisen-Nickel-Legierung vorzugsweise FeNi42 (Alloy 42); es handelt sich hierbei um ein kostengünstiges Substrat; weiterhin ist möglich ein Substrat aus einer Eisen-Nickel-Kobalt Legierung, vorzugsweise FeNi28Co18 (VACON 10), einzusetzen.

Weiterhin kann das Metall des Substrats aus dem Stahl 1.4767 (FeCr20Al5) bestehen; es ist auch möglich, daß ein Substrat aus dem Stahl 1.4541 oder aus dem Stahl 1.4571 einzusetzen. Darüberhinaus kann ein elektrischer Widerstand eingesetzt werden, bei dem das Metall des Substrats aus Nickel besteht.

Die als Isolationsschicht wirkende plattenförmige Membran überdeckt wenigstens teilweise die Ausnehmung innerhalb des Substrats, wobei die Membran aus SiO, MgO, ZrO, Si₃N₄, TiO₂, Al₂O₃ bzw. aus einem Gemisch dieser Materialien besteht; die Dicke liegt im Bereich von 0,5 bis
10 µm, vorzugsweise bei 2,0 - 2,5 µm.

Darüberhinaus ist es auch möglich, die Membran sandwichartig aus einer Kombination der zuvor genannten Oxide bzw. Oxidmischungen zu bilden. Eine solche sandwichartige Ausgestaltung hat den Vorteil, daß diese besonders stabil gegenüber thermischen und mechanischen Verspannungen ausgebildet werden kann.

Die Leiterbahn besteht vorzugsweise aus einer Platinschicht mit einer Dicke im Bereich von 0,1 µm bis 6 µm, vorzugsweise von 0,3 µm bis 0,6 µm. Aufgrund der geringen Dicke der Platinschicht ergibt sich eine sehr geringe Wärmeträgheit, so daß vorteilhafterweise eine rasche Ansprechbarkeit des Sensors zu erzielen ist. Die Leiterbahn ist zum Schutz ihrer Oberfläche mit einer Passivierungsschicht aus SiO oder Al₂O₃ versehen, wobei diese Schicht eine Dicke im Bereich von 0,3 bis 10 µm aufweist; aufgrund der geringen Dicke wird die rasche Ansprechbarkeit so gut wie nicht beeinträchtigt.

In einer weiteren bevorzugten Ausführungsform ist zwischen Substrat und Membran eine Ätzstoppschicht aufgebracht, die vorzugsweise aus Platin bzw. Titan in einer Dicke von 0,1 bis 6 µm, vorzugsweise von 2,5 - 3 µm besteht.

Die Aufgabe wird für ein Verfahren zur Herstellung eines elektrischen Widerstandes, insbesondere temperaturabhängigen Meßwiderstandes, mit geringer Masse mit einer Leiterbahn, die mit wenigstens zwei Anschluß-Kontaktfeldern versehen ist, die auf einer elektrisch isolierenden Oberfläsche eines Substrats angeordnet sind, wobei ein Teil der Leiterbahn wenigstens eine Ausnehmung des Substrats brückenartig überspannt und die Leiterbahn in einer Ebene angeordnet ist, dadurch gelöst, daß ein quaderförmig ausgebildetes Substrat auf seiner Vorderseite mit einer Ätzstoppschicht versehen wird, und auf seiner Rückseite mit einer photolithographischen Lackstrukturierung versehen wird, wobei eine naßchemische Freiätzung von der Rückseite des Metallsubstrats her bis an den zuvor aufgebrachten metallischen Ätzstopp erfolgt.

Diese Freiätzung erfolgt vorzugsweise durch Sprühätzen mit Hilfe einer FeCl₃-Lösung, wobei die Ätzstopp-, Membran-, und Passivierungsschichten vorzugsweise durch PVD- bzw. CVD-Verfahren aufgebracht sind. Hierbei erweist es sich als besonders vorteilhaft, daß die in der Leadframe-Ätztechnik bekannten Prozeßfolgen der Metallstrukturierung auch hier Verwendung finden.

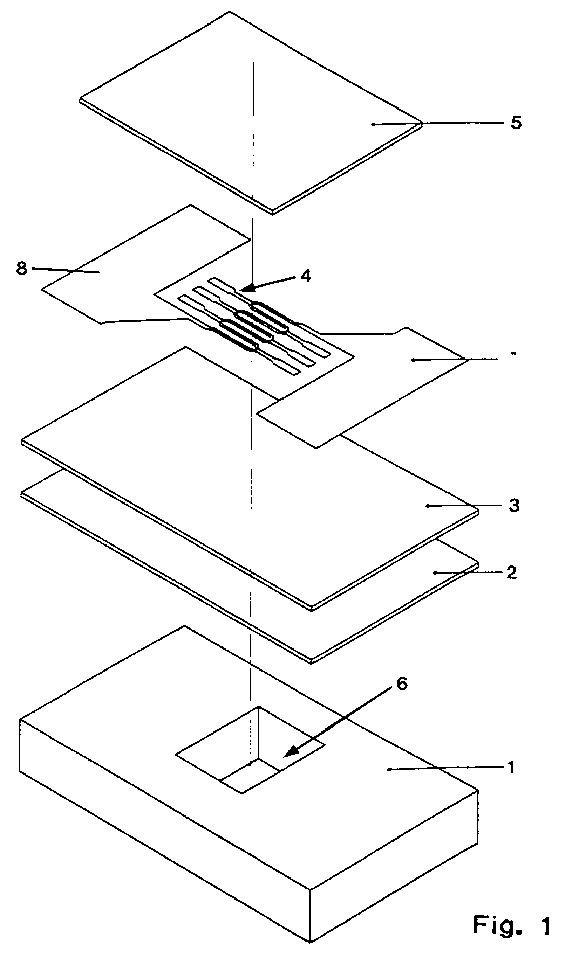

Im folgenden ist der Gegenstand der Erfindung anhand der Figur 1 näher erläutert. Diese Figur zeigt in einer schematischen Explosionsdarstellung den strukturellen Aufbau des elektrischen Widerstandes.

Das Substrat 1 besteht aus Metall, vorzugsweise aus einer Eisen-Nickel-Legierung und weist eine Dicke im Bereich von 0,15 bis 0,5 mm auf; als besonders geeignet hat sich die Legierung FeNi42 (Alloy 42) mit einer Dicke von 0,20 mm erwiesen. Auf dieses Substrat wird dann mittels PVD bzw. CVD-Verfahren ein metallischer Ätzstopp 2, bevorzugt aus einer Platin-Schicht oder einer Ti-Schicht der Dicke 2,5 - 3 µm, sowie die eigentliche Membran-Schicht 3, die aus einem elektrisch isolierendem Werkstoff - wie z. B. SiO, MgO, ZrO, Si₃N₄, TiO₂, Al₂O₃ bzw. aus Gemischen dieser Materialien - besteht, aufgebracht, wobei die Dicke im Bereich von 0,5 bis 10 µm liegt; bevorzugt weist die Membran eine Dicke von 2,5 µm auf. Die Leiterbahn 4 besteht vorzugsweise aus einer Platinschicht und weist eine Dicke im Bereich von 0,1 µm bis 6 µm, vorzugsweise von 0,3 µm bis 0,4 µm auf; Leiterbahn 4 ist auf ihrer Außenoberfläche mit einer Passivierungsschicht 5 selektiv abgedeckt, welche aus einer SiO-bzw. Al₂O₃-Schicht besteht, die eine Dicke im Bereich von 0,3 bis 10µm aufweist. Die von der Leiterbahn 4 brückenartig überspannte Ausnehmung im Substrat 1 ist mit Ziffer 6 bezeichnet; die Ausnehmung ist vorzugsweise durchgängig, d.h. fensterartig ausgebildet. (?).

Die Anschlußkontaktfelder 7, 8 sind für eine elektrische Kontaktierung nach diesem Prozeß noch offen und nicht von der Passivierungsschicht 5 belegt.

Die zwischen dem Substrat 1 und der Membran-Schicht 3 aufgebrachte Ätzstoppschicht 2 kann für spezielle Anwendung auch entfallen; in diesem Fall übernimmt die Membran-Schicht 3 selbst die Funktion der eigentlichen Ätzstoppschicht.

Die geringe thermische Masse des als Sensor einsetzbaren Widerstandes wird durch eine naßchemische Freiätzung von der Rückseite des Substrates 1 her bis an den metallischen Ätzstopp bewirkt, wobei die Freiätzung durch Sprühätzen mit einer FeCl₃-Lösung erfolgt.

Hierfür erfolgt zuvor eine photolithographische Lackstrukturierung der Rückseite des Metallsubstrates 1 gemäß dem bekannten Stand der Technik.

Gemäß Figur 1 befindet sind auf der strukturierten Leiterschicht 4 die Passivierungsschicht 5, welche aus einem elektrisch isolierendem Werkstoff besteht und vorzugsweise im PVD bzw. CVD-Verfahren auf Leiterbahn 4 aufgebracht ist; die Passivierungsschicht 5 besteht vorzugsweise aus Aluminiumoxid; es ist jedoch auch möglich eine Passivierungsschicht aus Siliziumoxid einzusetzen. Sie wird auf die strukturierte Leiterschicht 4 so aufgebracht, daß die Anschlußkontaktfelder frei bleiben.

## Patentansprüche

1. Elektrischer Widerstand, insbesondere temperaturabhängiger Meßwiderstand mit geringer Masse und dadurch schneller Ansprechzeit, mit einer Leiterbahn (4), die mit wenigstens zwei Anschluß-Kontaktfeldern (7, 8) versehen ist, die auf einer elektrisch isolierenden Oberfläche eines Substrats (1) angeordnet sind, wobei ein Teil der Leiterbahn wenigstens eine Ausnehmung (6) des Substrats brückenartig überspannt und die Leiterbahn (4) in einer Ebene angeordnet ist, dadurch gekennzeichnet, daß das Substrat (1) aus Metall besteht, und mit einer aufgebrachten Isolationsschicht als Membran (3) versehen ist, wobei die Leiterbahn (4) auf der Membran (3) angeordnet ist.

2. Elektrischer Widerstand nach Anspruch 1, dadurch gekennzeichnet, daß die Leiterbahn durch eine Passivierungsschicht (5) bis auf ihre Anschlußkontaktfelder (7, 8) selektiv abgedeckt ist.

3. Elektrischer Widerstand nach Anspruch 1, dadurch gekennzeichnet, daß das Substrat (1) aus einem Metall bzw. einer Metall-Legierung besteht und eine Dicke im Bereich von 0,15 mm bis 0,6 mm, vorzugsweise von 0,20 mm bis 0,25 mm aufweist.

4. Elektrischer Widerstand nach Anspruch 1 bis 3, dadurch gekennzeichnet, daß das Metall aus einer Eisen-Nickel-Legierung, vorzugsweise FeNi42 (Alloy 42) besteht.

5. Elektrischer Widerstand nach Anspruch 1 bis 3, dadurch gekennzeichnet, daß das Metall aus einer Eisen-Nickel-Kobalt Legierung, vorzugsweise FeNi28Co18 (VACON 10) besteht.

6. Elektrischer Widerstand nach Anspruch 1 bis 3, dadurch gekennzeichnet, daß das Metall aus dem Stahl 1.4767 (FeCr20Al5) besteht.

7. Elektrischer Widerstand nach Anspruch 1 bis 3, dadurch gekennzeichnet, daß das Metall aus dem Stahl 1.4541 besteht.

8. Elektrischer Widerstand nach Anspruch 1 bis 3, dadurch gekennzeichnet, daß das Metall aus dem Stahl 1.4571 besteht.

9. Elektrischer Widerstand nach Anspruch 1 bis 3, dadurch gekennzeichnet, daß das Metall aus Nickel besteht.

10. Elektrischer Widerstand nach einem der Ansprüche 1 bis 9, dadurch gekennzeichnet, daß die elektrische Leiterbahn auf einer die Ausnehmung wenigstens teilweise überdeckenden plattenförmigen Membran aufgebracht ist, wobei die Membran aus SiO, MgO, ZrO, Si₃N₄, TiO₂, Al₂O₃ bzw. aus Mischoxiden dieser Materialen besteht und eine Dicke im Bereich von 0,5 bis 10 µm, vorzugsweise von 2,5 µm aufweist.

11. Elektrischer Widerstand nach Anspruch 10, dadurch gekennzeichnet, daß diese Membran sandwichartig aus einer Kombination der verschiedenen Materialien aufgebaut ist.

12. Elektrischer Widerstand nach einem der Ansprüche 1 bis 11, dadurch gekennzeichnet, daß die Leiterbahn (4) in einer Ebene angeordnet ist und aus einer Platinschicht besteht, die eine Dicke im Bereich von 0,1 µm bis 6 µm, vorzugsweise von 0,3 µm bis 0,6 µm, aufweist.

13. Elektrischer Widerstand nach den Ansprüchen 1 bis 12, dadurch gekennzeichnet, daß die Passivierungsschicht (5) aus einer SiO- oder Al₂O₃-Schicht besteht und diese eine Dicke im Bereich von 0,3 µm bis 10 µm aufweist.

14. Elektrischer Widerstand nach einem der Ansprüche 1 bis 13, dadurch gekennzeichnet, daß die auf dem Metallsubstrat aufgebrachte Ätzstoppschicht (2) eine Dicke von 0,1 µm bis 6 µm, vorzugsweise 1,5 µm bis 2,5 µm aufweist.

15. Elektrischer Widerstand nach einem der Ansprüche 1 bis 14, dadurch gekennzeichnet, daß die auf dem Metallsubstrat aufgebrachte Ätzstoppschicht aus Ti, Pt, Ni oder einer Kombination dieser Elemente besteht.

16. Elektrischer Widerstand nach einem der Ansprüche 1 bis 8, dadurch gekennzeichnet, daß die auf dem Metallsubstrat aufgebrachten Ätzstopp-, Membran- und Passivierungsschichten per PVD bzw. CVD-Verfahren aufgebracht sind.

17. Verfahren zur Herstellung eines elektrischen Widerstandes, insbesondere temperaturabhängiger Meßwiderstandes, mit geringer Masse mit einer Leiterbahn, die mit wenigstens zwei Anschluß-Kontaktfeldern versehen ist, die auf einer elektrisch isolierenden Oberfläche eines Substrats angeordnet sind, wobei ein Teil der Leiterbahn wenigstens eine Ausnehmung des Substrats brückenartig überspannt und die Leiterbahn in einer Ebene angeordnet ist, dadurch gekennzeichnet, daß ein quaderförmig ausgebildetes Substrat auf seiner Vorderseite mit einer Ätzstoppschicht versehen wird, und auf seiner Rückseite mit einer photolithographischen Lackstrukturierung versehen wird, wobei eine naßchemische Freiätzung von der Rückseite des Metallsubstrats her bis an den zuvor aufgebrachten metallischen Ätzstopp erfolgt.

18. Verfahren nach Anspruch 17, dadurch gekennzeichnet, daß die geringe thermische Masse des Sensors durch eine naßchemische Freiätzung von der Rückseite des Metallsubstrates her bis an einen metallischen Ätzstopp erfolgt.

19. Verfahren zur Herstellung eines elektrischen Widerstandes nach Anspruch 18, dadurch gekennzeichnet, daß die Freiätzung mittels Sprühätzen mit Hilfe einer FeCl₃-Lösung erfolgt.
